(19) Europäisches Patentamt / European Patent Office / Office européen des brevets

(11) **EP 3 257 120 B1**

(12) **EUROPÄISCHE PATENTSCHRIFT**

(45) Veröffentlichungstag und Bekanntmachung des Hinweises auf die Patenterteilung:
**05.01.2022   Patentblatt 2022/01**

(51) Int Cl.:
*H01T 1/12* (2006.01)          *H01T 4/00* (2006.01)
*H02H 3/04* (2006.01)

(21) Anmeldenummer: **16702417.3**

(22) Anmeldetag: **01.02.2016**

(86) Internationale Anmeldenummer:
**PCT/EP2016/052054**

(87) Internationale Veröffentlichungsnummer:
**WO 2016/128241 (18.08.2016 Gazette 2016/33)**

(54) **MEHRSTUFIGE, KOORDINIERTE ÜBERSPANNUNGSABLEITERSCHALTUNG**

MULTISTAGE COORDINATED OVERVOLTAGE ARRESTER CIRCUIT

CIRCUIT DE PROTECTION CONTRE LES SURTENSIONS COORDONNÉ À ÉTAGES MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2015   DE 102015001810**
**09.11.2015   DE 102015014468**

(43) Veröffentlichungstag der Anmeldung:
**20.12.2017   Patentblatt 2017/51**

(73) Patentinhaber: **DEHN SE + Co KG**
**92318 Neumarkt / Opf. (DE)**

(72) Erfinder:
• **MOOSBURGER, Benjamin**
**92385 Seubersdorf/Dasswang (DE)**
• **SPIES, Johannes**
**92318 Neumarkt (DE)**
• **GÖTZ, Markus**
**92364 Deining (DE)**

(74) Vertreter: **Prinz & Partner mbB**
**Patent- und Rechtsanwälte**
**Rundfunkplatz 2**
**80335 München (DE)**

(56) Entgegenhaltungen:
WO-A2-2010/079132          DE-A1- 10 211 795
DE-A1-102008 016 585      DE-U1-202012 002 281

## Beschreibung

Die Erfindung betrifft eine mehrstufige, koordinierte Überspannungsableiterschaltung mit mindestens einem ersten Grobschutz-Ableiterpfad in einem ersten Querzweig und einem zweiten, Feinschutz-Ableiterpfad in einem weiteren Querzweig, wobei im ersten Ableiterpfad eine galvanisch getrennte Stoßstrommessvorrichtung und eine Überwachungseinrichtung für einen physikalischen Zustand des im ersten Ableiterpfad befindlichen Überspannungsableiters angeordnet sind, gemäß Oberbegriff des Anspruchs 1.

Aus der DE 10 2004 006 987 B3 ist eine Anordnung zur funkbasierten Zustandskontrolle von Überspannungsschutzgeräten in Niederspannungsnetzen oder der Informationstechnik vorbekannt, welche eine Fehlererkennung auf der Basis von Schwellwerten einer oder mehrerer Temperaturen realisiert.

Aus der WO 2011/058318 A1 gehört eine Diagnoseschaltung für Überspannungsschutzgeräte zum Stand der Technik, welche mit Hilfe eines Sensors in der Lage ist, schnelle transiente Strombelastungen in Überspannungsschutzgeräten zu registrieren. Weiterhin wird gemäß der dortigen Lösung die Anzahl der Stromimpulse in einer Auswerteeinrichtung gespeichert. Über die Anzahl der registrierten Impulse kann dann eine Bewertung des Zustands des Überspannungsschutzgeräts erfolgen.

Die DE 10 2008 016 585 A1 offenbart eine Messeinrichtung, die den Spannungsverlauf an einem Überspannungsschutzgerät erfasst und selbigen mittels einer Diagnoseeinrichtung bewertet. Über die Merkmale des Spannungsverlaufs, wie Amplitude, Steigung, Spannungswertebereich und Zeitmerkmale erfolgt eine Bestimmung des Funktionszustands des Überspannungsschutzgeräts.

Die EP 2 574 940 A1 zeigt eine Anordnung zur induktiven Überwachung von Ableitströmen. Diese Anordnung ist seriell zu einem Überspannungsschutzgerät befindlich und weist eine Induktionsspule, einen Integrator, eine Auswerteeinheit sowie eine Anzeigevorrichtung nebst Kommunikationsschnittstelle auf.

Bei dem Zustandskontroll- oder Diagnosesystem und dem zugehörigen Verfahren nach DE 10 2011 110 252 A1 soll eine Bewertung des Zustands von Überspannungsschutzgeräten erfolgen. Jedes Gerät umfasst einen Funktionsbaustein, welcher im Gehäuse untergebracht ist. Dieser Funktionsbaustein kann z.B. ein Überspannungsschutzbaustein sein, welcher überwacht wird. Darüber hinaus ist eine Überwachungs-Übertragungseinrichtung vorgesehen, welche den Funktionsbaustein in dem Gerät überwacht und eine Information über den momentanen Zustand des Funktionsbausteins übertragen kann. Das Abfragen der Information erfolgt durch ein Lesegerät. Die Überwachungs- und Übertragungseinrichtung jedes Geräts besteht aus einem Resonatorschaltkreis aus passiven elektronischen Bauelementen. Diesbezüglich kommen Widerstände, Kondensatoren oder Induktivitäten zum Einsatz. Die Überwachungs- und Übertragungseinrichtung enthält keine aktiven Bauelemente, insbesondere keine RFID-Transponder oder RFID-Chips.

Aus der EP 2 675 032 A1 ist ein Diagnoseverfahren für mehrstufige Überspannungsschutzgeräte vorbekannt. Das betreffende Überspannungsschutzgerät enthält mindestens eine Gasentladungsstrecke als erste Stufe und mindestens eine Diodenstrecke zwischen einem Ausgang und einem Bezugspotential als zweite Stufe und mindestens eine zwischen dem Eingang und dem Ausgang geschaltete Entkopplungsinduktivität. Das vorbekannte Diagnoseverfahren zeichnet sich dadurch aus, dass eine an einer Sekundärinduktivität, die mit der Entkopplungsinduktivität in einer induktiven Wirkungsverbindung steht, anliegende Sekundärspannung gemessen und im Hinblick auf Überspannungsereignisse ausgewertet wird.

Bei dem elektrischen Schaltkreis mit Überspannungsschutz-Überwachungseinrichtung nach DE 11 2010 004 351 T5 dient die Überwachungseinrichtung dem Überprüfen der Stromvorgänge in der Überspannungsschutzeinrichtung und zum Erfassen von Verstößen in der Schwellspannung aufgrund von schnellen transienten, elektrischen Störgrößen. Konkret nutzt die Überwachungseinrichtung elektromagnetische oder elektrostatische Felder, die aufgrund des durch die Überspannungsschutzeinrichtung fließenden Stroms hervorgerufen werden, und zwar entweder durch induktive oder durch kapazitive Überwachung als Erfassungsmittel. Diesbezüglich kann die vorbekannte Überwachungseinrichtung eine Spulenverdrahtung oder ein Platinenleiterzug sein, der um die Überspannungsschutzeinrichtung axial gewickelt wird und/oder die als Leiterbahn oder Platinenzug in der Überspannungsschutzeinrichtung angeordnet ist. Darüber hinaus können in Bezug auf die Erfassung verschiedene andere Verfahren zum Einsatz kommen. Beispielsweise kann die Überwachungseinrichtung einen Sensor aufweisen, der zum Erfassen einer Änderung eines physikalischen Zustands in der Überspannungsschutzeinrichtung ausgelegt ist.

Aus der gattungsbildenden DE 20 2012 002 281 U1 ist ein Überspannungsschutzgerät mit einer Messeinrichtung zur Überwachung von einem oder mehreren Überspannungsschutzelementen vorbekannt. Eine dortige Auswerteeinrichtung ist dazu eingerichtet, impulsartige Überspannungsereignisse, welche durch das Überspannungsschutzelement abgeleitet werden, zu zählen, wobei die Auswerteeinrichtung über eine Lichtmesseinrichtung mit dem Überspannungsschutzelement verbunden ist. Weiterhin ist eine Einrichtung zur Erkennung eines länger fließenden Stromes vorhanden, welcher durch das Überspannungsschutzelement fließt. Die Auswerteeinrichtung bestimmt, basierend auf den gezählten Impulsen und/oder einem erkannten länger fließenden Strom, ob das Überspannungsschutzelement noch betriebsfähig, vorgeschädigt oder unbrauchbar ist.

Den vorgestellten Lösungen des Standes der Technik ist gemeinsam, dass selbige nicht in der Lage sind, den Zustand von mehrstufigen, koordinierten Überspannungsableiterschaltungen kontinuierlich zu überwachen. Das momentane Auslesen oder Anzeigen von Schädigungssituationen gibt zwar im Einzelfall Hinweise bezogen auf die weitere Verwendbarkeit der Schutzschaltung, erlaubt jedoch nicht eine stetige Zustandsbewertung.

Wird ausschließlich die Temperatur von Überspannungsableitern überwacht, ist es nicht möglich, eine kurzzeitige, hohe Überlastung des Schutzelements zu erkennen. Wird hingegen der Stromfluss durch den Ableitpfad überprüft, können dauerhafte thermische Überlastungen nicht mit der notwendigen Exaktheit registriert werden. Die vorgenannten Detektionsprobleme können Folgen einer hohen Umgebungstemperatur sein, die z.B. aufgrund eines falschen Einsatzes des Schutzgeräts oder bei dauerhaften Überspannungen entstehen.

Die Lösung der Aufgabe der Erfindung erfolgt durch eine mehrstufige, koordinierte Überspannungsableiterschaltung mit Überwachungseigenschaften gemäß der Merkmalskombination nach Patentanspruch 1, wobei die Unteransprüche mindestens zweckmäßige Ausgestaltungen und Weiterbildungen darstellen.

Es wird demnach von einer mehrstufigen, koordinierten Überspannungsableiterschaltung mit mindestens einem ersten Grobschutz-Ableiterpfad in einem ersten Querzweig und einem zweiten, Feinschutz-Ableiterpfad in einem weiteren Querzweig ausgegangen. Bezüglich des Begriffs "Koordinierung" ist hierunter die Abstimmung der Eigenschaften zwischen Grobschutz und Feinschutz zu verstehen.

Im ersten Ableiterpfad ist eine galvanisch getrennte Strommessvorrichtung und eine Überwachungseinrichtung für einen physikalischen Zustand des im ersten Ableiterpfad befindlichen Überspannungsableiters angeordnet.

Weiterhin ist den Überspannungsableitern im zweiten Ableiterpfad jeweils ebenfalls eine Überwachungseinrichtung für einen physikalischen Zustand zugeordnet.

Als Zustandsüberwachung findet sowohl bezogen auf den Grobschutz-Ableiterpfad als auch auf den zweiten Ableiterpfad eine Bestimmung der Temperatur der jeweiligen Überspannungsableiter statt, wobei aus den gewonnenen Temperaturen und insbesondere der Temperaturanstiegszeit die umgesetzte Energie im jeweiligen Überspannungsableiter ermittelt und hieraus eine Bestimmung möglicher Schädigungen der jeweiligen Überspannungsableiter vorgenommen wird. Die im ersten Ableiterpfad befindliche, galvanisch getrennte Strommessvorrichtung ist in der Lage, eine Analyse des Stoßstroms im Überspannungsfall vorzunehmen, wobei der eingesetzte Temperatursensor die Temperatur des Ableitelements im ersten Ableiterpfad ermittelt, um eine Analyse der Dauerbelastung dieses Überspannungsableiters, z.B. eines Gasableiters, vornehmen zu können.

Es werden also mehrere Sensoren bezogen auf die Überspannungsableiter angeordnet, wobei die von den Sensoren gelieferten Daten einer Auswerteeinheit zugeführt werden, um eine Alterung bzw. den Defekt der eigentlichen Schutzschaltung bzw. der überwachten Schutzelemente, d.h. der Überspannungsableiter zu diagnostizieren. Auf der Basis einer gemeinsamen Betrachtung aller Messwerte lässt sich in Verbindung mit Modellfunktionen ein Rückschluss auf die Parameter der Belastung wie Spannung, Strom und Zeit ableiten, woraus dann letztendlich der Zustand bezüglich Alterung oder Defekt bewertet werden kann. Der Grundansatz bezüglich der genutzten Messprinzipien liegt darin, dass einerseits schnell veränderliche Ströme, die belastungsrelevant sind, über ein induktives Verfahren ermittelbar sind. Diesbezüglich kann bei einer Ausgestaltung der Erfindung eine Messspule über dem Strompfad im ersten Grobschutz-Ableiterpfad angeordnet werden.

Die eingesetzten Temperatursensoren liefern Temperaturmesswerte der jeweils eingesetzten Überspannungsableiter.

Auswertungsseitig werden in einem ersten Schritt die Veränderungen der Temperaturen und der Stromflusswerte bestimmt. Aus den Veränderungswerten wird dann die innere Temperatur der Überspannungsableiter berechnet, wobei diesbezüglich bekannte Kennlinien- oder sonstige Parameter der eingesetzten Bauteile Anwendung finden.

Die Auswerteeinheit ist darüber hinaus in der Lage, die bestimmten Schädigungen der Überspannungsableiter aufzusummieren und über eine Anzeigeeinheit darzustellen oder an eine übergeordnete Auswerteeinheit zu übertragen, was sowohl drahtgebunden als auch drahtlos erfolgen kann.

An allen eingesetzten Überspannungsableitern sind, gemäß der Grundidee der Erfindung folgend, thermisch leitend, jedoch galvanisch getrennt als Temperatursensoren insbesondere Thermoelemente vorgesehen, wobei als Strommessvorrichtung die bereits erwähnte Messspule am ersten Ableiterpfad ausgebildet ist.

Im ersten Ableiterpfad wird erfindungsgemäß der im Überspannungsfall auftretende Peakstrom und die Temperaturveränderung des dort eingesetzten Überspannungsableiters erfasst und aus diesen Werten ein äquivalenter Rechteckimpuls zur Schädigungsbewertung bestimmt.

Beim Überschreiten eines vorgegebenen Stromschwellenwerts wird der eingesetzte Ableiter als Defekt betrachtet.

Zur Bestimmung der Schädigung oder des Alterungsverhaltens der Überspannungsableiter im zweiten Ableiterpfad wird das impulsspannungsabhängige Erwärmungsverhalten der eingesetzten Überspannungsableiter analysiert.

Bei einer bevorzugten Ausgestaltung der Erfindung sind im zweiten Ableiterpfad im Querzweig ein Halbleiterbauelement und im Längszweig lineare ohmsche Widerstände angeordnet. Dieser zweite Ableiterpfad realisiert den Feinschutz der Gesamtanordnung, wobei bei einer bevorzugten Ausführungsform das Halbleiterbauelement als eine oder mehrere Diodenbaugruppen, insbesondere als eine Supressordiode ausgebildet ist.

Aus dem Stromintegral im zweiten Ableiterpfad und den Kennliniendaten der Diodenbaugruppe wird die jeweilige Sperrschichttemperatur bestimmt und hieraus eine Schädigung der Baugruppe ermittelt.

Aus der an den linearen Widerständen umgesetzten Energie, welche über die Temperaturmessung ermittelbar ist, besteht die Möglichkeit, in indirekter Weise das Stromintegral im zweiten Ableiterpfad zu bestimmen.

Bei einer bevorzugten Weiterbildung der Erfindung sind die Überwachungseinrichtungen und die Strommessvorrichtung als ein, auf einem separaten Verdrahtungsträger befindliche Baugruppe ausgebildet. Diese, auf dem separaten Verdrahtungsträger befindliche Baugruppe kann dann als Nachrüstbausatz bzw. zur Ertüchtigung vorhandener Überspannungsableiteinrichtungen zum Zweck der Überwachung dieser genutzt werden.

Bei dieser Weiterbildung der Erfindung besteht selbstverständlich auch die Möglichkeit, die notwendigen elektronischen Baugruppen, welche die Auswerteeinheit bilden, ebenfalls auf diesem separaten Verdrahtungsträger anzuordnen, insbesondere kann hier ein an sich bekannter Mikrokontroller nebst zugehöriger Berechnungssoftware eingesetzt werden.

Grundsätzlich kann anstelle mehrstufiger, koordinierter Überspannungsableiteranordnungen die erfindungsgemäße Lösung auch für ein einzelnes, meist spannungsbegrenzendes oder spannungsschaltendes Bauteil Verwendung finden. In diesem Fall besteht die Möglichkeit, durch eine Kombination zweier Sensoren dieses spannungsbegrenzende oder spannungsschaltende Bauteil vollständig zu überwachen. Durch eine Anordnung eines induktiven Stromsensors mit nachgeschaltetem Spitzenwertdetektor kann der maximale Impulsstrom bestimmt werden. Durch die von einem, dem überspannungsschützenden Bauteil zugeordneten Temperatursensor erfasste Veränderung der Bauteiltemperatur gegenüber der Umgebungstemperatur wird auf die im Bauteil umgesetzte Energie geschlossen. Eine erste Analyse liefert aus diesen Größen, die einer Auswerteeinheit zugeführt werden, Parameter der Impulsbelastung. Auf der Basis dieser Parameter besteht dann die Möglichkeit, für das einzelne, spannungsbegrenzende oder spannungsschaltende Bauteil eine Beurteilung des Maßes der Schädigung dieses Bauteils vorzunehmen.

Die Erfindung soll nachstehend anhand eines Ausführungsbeispiels sowie unter Zuhilfenahme von Figuren näher erläutert werden.

Hierbei zeigen:

Fig. 1    ein Prinzipschaltbild einer mehrstufigen, koordinierten Überspannungsableiterschaltung mit Überwachungseinrichtung;

Fig. 2    eine schematische Darstellung zur Ableitung eines äquivalenten Rechteckimpulses;

Fig. 3    beispielhafte interpolierte Herstellerangaben zur Belastungsfähigkeit eines beispielhaften Gasableiters vom Typ T80-A90X;

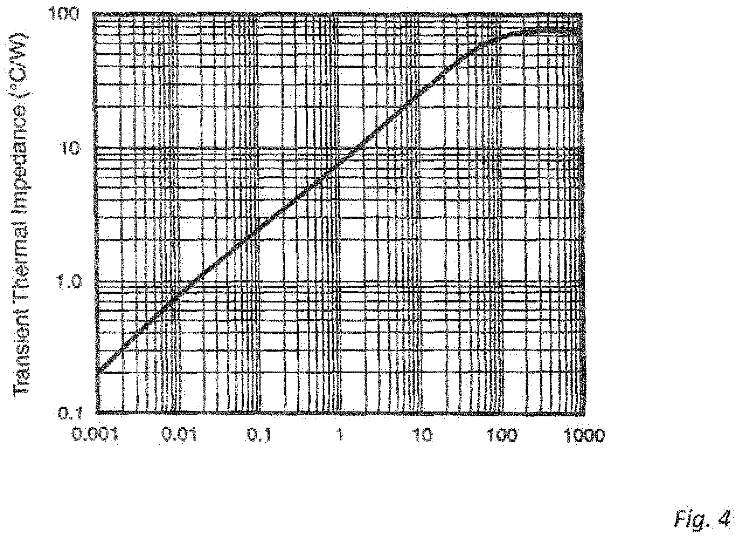

Fig. 4    eine Kennlinie zur Bestimmung des thermischen Widerstands einer Supressordiode (schwarz dargestellt) und die mathematische Näherung (rot dargestellt) und

Fig. 5    ein Diagramm zur Ermittlung der Lebenszeit einer Supressordiode in Abhängigkeit von deren Sperrschichttemperatur.

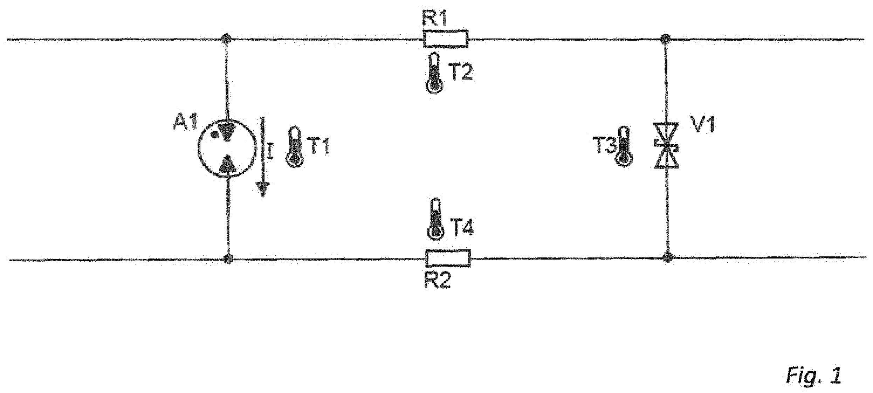

Gemäß der Darstellung nach Fig. 1 wird von einer mehrstufigen, koordinierten Überspannungsableiterschaltung mit mindestens einem ersten Grobschutz-Ableiterpfad im Querzweig und mindestens einem zweiten, Feinschutz-Ableiterpfad im Längs- und Querzweig ausgegangen.

Im ersten Ableiterpfad befindet sich ein Gasableiter A1, wobei im Längszweig des zweiten Ableiterpfads ein Widerstand R1 und R2 angeordnet ist.

Im Querzweig des zweiten, Feinschutz-Ableiterpfads befindet sich darüber hinaus noch eine Supressordiode V1.

Um hohe Stoßströme im ersten Grobschutz-Ableiterpfad, insbesondere am Gasableiter A1 erkennen zu können, wird der dortige Stromfluss galvanisch getrennt ermittelt, was durch I und die Pfeildarstellung symbolisiert ist.

Um zugleich einen Rückschluss auf einen anhaltenden Stromfluss zu ermitteln, wird gemäß T1 die Temperatur am Gasableiter A1 überwacht. Diese liefert über eine nachgeordnete Auswerteschaltung unter Berücksichtigung mathematischer Modelle einen Anhaltspunkt zur umgesetzten, womöglich schädigungsrelevanten Energie.

Die im zweiten, Feinschutz-Ableiterpfad, bestehend aus den Widerständen R1, R2 und der Diode V1, aufgenommenen Impulsformen können aufgrund der Nichtlinearität der Supressordiodenanordnung V1 durch eine Verknüpfung der Bauteiltemperaturen rechnerisch ermittelt werden.

Aus den Temperatursensoren T2 am Widerstand R1, T3 an der Diodengruppe V1 und T4 am Widerstand R2 kann ein Rückschluss über die umgesetzte Leistung in den Bauelementen vollzogen werden. Hieraus besteht die Möglichkeit, die Impulsspannung und den Impulsstrom zu berechnen. Die derart gewonnenen Impulsparameter lassen sich in Funktionen einsetzen, aus denen sich die inneren Temperaturen der betreffenden Bauelemente ermitteln lassen. Eine mögliche Schädigung der Bauelemente wird von der in der Figur nicht dargestellten Auswerteeinheit aufsummiert und an einer, ebenfalls nicht dargestellten Anzeige zur Visualisierung gebracht.

Für die Messung der Temperaturen können temperaturabhängige Widerstände, aber auch Thermoelemente verwendet werden. Um eine zuverlässige Messung auch über einen langen Zeitraum von mehreren Jahren zu gewährleisten, ist die Verwendung von Thermoelementen besonders vorteilhaft.

Die von einem Thermoelement erzeugte Spannung ist annähernd proportional zu der Temperaturdifferenz, die zwischen dem Verbindungspunkt der Thermoelemente und der Anschlussstelle herrscht. Die entsprechenden Thermoelemente werden thermisch leitend, jedoch galvanisch getrennt an die Gehäuse oder die Oberfläche der entsprechenden Bauelemente angekoppelt.

Die erzeugte Thermospannung ist üblicherweise für eine direkte Messung und Verarbeitung zu gering, so dass eine Verstärkung und Signalfilterung erfolgt. Die so vorverarbeiteten Daten werden dann zur Auswerteeinheit weitergeleitet.

Für die Messung von schnell veränderlichen Strömen ist ein induktives Verfahren besonders geeignet. Darüber hinaus kann in vorteilhafter Weise eine galvanische Trennung des Messkreises zum Ableiterkreis umgesetzt werden. Bei einer Ausführungsform wird eine Messspule über dem Strompfad im ersten Ableiterpfad angeordnet. Die Ausgangsspannung der Messspule, die proportional zu dI/dT ist, wird durch einen RC-Tiefpass aufintegriert, um ein Signal zu erhalten, das proportional zum Strom ist. Um auch steilflankige Ströme detektieren zu können, ist bei einer Ausführungsform der Erfindung ein Spitzenwertdetektor vorgesehen.

Die Auswerteeinheit bestimmt in einem ersten Schritt zunächst die Veränderungen der Temperaturen und des Stromflusses. Aus diesen Werten wird je nach Ereignis mit verschiedenen mathematischen Funktionen die interne Temperatur der Bauelemente ermittelt. Hieraus können bereits Rückschlüsse auf die entstandene Schädigungen der einzelnen Komponenten gezogen werden.

Eine erste Beurteilung der Schädigung erfolgt auf dem Grund der Bestimmung der Impulsdauer. Diese wird anhand der gemessenen Temperaturanstiegszeiten bestimmt. Unterschreitet die Impulsbelastung eine Zeitdauer von einer Sekunde, wird das thermische Verhalten der eingesetzten Bauelemente in dieser Zeitspanne als adiabatisch angesehen. Die gemessene Temperatur lässt sich dann mit einer Konstante in die umgesetzte Energie im Bauteil umrechnen.

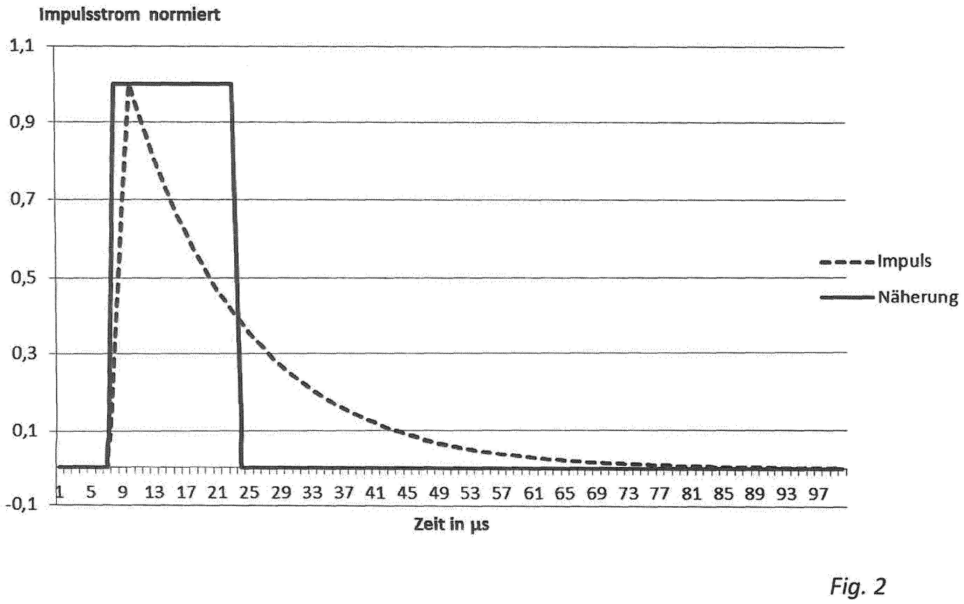

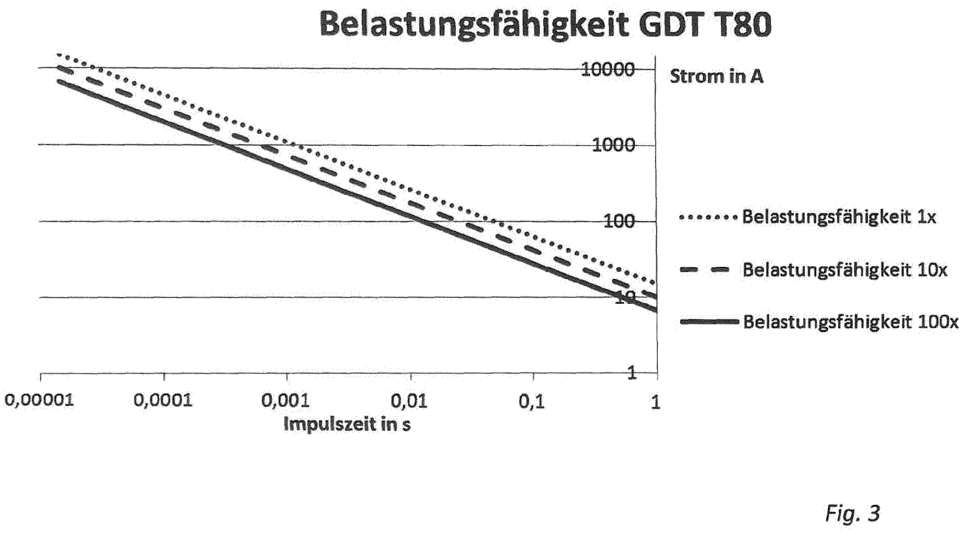

Im ersten Ableiterpfad werden der Peakstrom und die Temperaturveränderung des Gasableiters A1 erfasst. Die betreffenden Werte werden in einen äquivalenten Rechteckimpuls gemäß Formel 1 und Fig. 2 umgerechnet. Je nach Impulsform und den Herstellerspezifikationen gemäß Fig. 3, wird über die Beziehungen nach Formel 2 und Formel 3 ein Schädigungswert des betreffenden Bauteils ermittelt.

Die im Hersteller-Datenblatt angegebenen Daten zur Belastungsfähigkeit eines Gasableiters lassen sich interpolieren und über geeignete Funktionen nachbilden. Hieraus kann eine Gleichung für die Schädigung S in Prozent des Gasableiters abhängig von dem Impulsspitzenstrom und der Temperaturveränderung im Ableiter bestimmt werden.

Formel 1 Bestimmung der Impulsdauer:

$$t_{rect} = \frac{\Delta \vartheta}{a} * \frac{1}{I_{max} * b}$$

Tabelle 1 Bestimmung der Impulsdauer

| Formelzeichen | Bezeichnung | Einheit |
|---|---|---|
| trect | Zeitdauer des Rechteckimpuls | s |
| $\Delta \vartheta$ | Temperaturänderung | K |
| a | Thermische Konstante (Bauteilabhängig) | K/Ws |
| Imax | gemessener Maximalstrom | A |
| b | Spannunqskonstante (Bauteilabhängig) | V |

Formel 2 Berechnung der Schädigung:

$$S = I_{max}^{2,16} * \left(\frac{1}{15*d}\right)^{-5,68} * (a*b*c)^{3,53} * \left(\frac{1}{\Delta\vartheta}\right)^{3,53}$$

Formel 3 Berechnung der Schädigung (vereinfacht):

$$S = e * I_{max}^{2,16} * \Delta\vartheta^{-3,53}$$

Tabelle 2 Berechnung der Schädigung der GDT T80-A90X

| Formelzeichen | Bezeichnung | Einheit |
|---|---|---|
| Imax | gemessener Maximalstrom | A |
| $\Delta\vartheta$ | Temperaturänderung | K |
| a | Thermische Konstante (Bauteilabhängig) | K/Ws |
| b | Spannungskonstante (Bauteilabhängig) | V |
| c | Zeitkonstante | s |
| d | Strom konstante | A |
| e | Schädigungskonstante (Bauteilabhängig) | $A^{-2,16} * K^{3,53}$ |
| s | Schädiqunq | % |

Zusätzlich zur Schädigungsberechnung erfolgt noch eine Stromschwellenbetrachtung. Beim Überschreiten einer bestimmten Stromschwelle besteht die Gefahr, dass der Gasableiter A1 aufgrund eines hohen Gasdrucks beschädigt wird. Aus diesem Grund wird beim Überschreiten einer vorgegebenen Schwelle der Ableiter als defekt diagnostiziert.

Die Langzeitstromdetektion erfolgt über die Temperaturmessung des Gasableiters A1 mit Hilfe des Temperatursensors T1. Wird eine bestimmte Temperaturschwelle überschritten, so wird der Gasableiter ebenfalls als defekt bewertet. Diese Temperatur hängt mit dem Schmelzpunkt verwendeter Lote und angegebenen Maximaltemperaturen des Gasableiters zusammen.

Das Modell zur Alterungsbestimmung im zweiten, Feinschutz-Ableiterpfad basiert auf dem impulsspannungsabhängigen Erwärmungsverhalten der dort befindlichen Bauteile.

Aufgrund des spannungsbegrenzenden Verhaltens der eingesetzten Diode V1 ist die umgesetzte Energie in der Diode V1 proportional zum Stromintegral im Sekundärpfad, da die Diodenspannung als annähernd konstant angenommen werden kann.

Die in den linearen Widerständen R1 und R2 umgesetzte Energie ist proportional zum Integral des Stromquadrats über dem Sekundärpfad.

Diese Energie weist bei kurzzeitigen Impulsen einen direkten Zusammenhang zur äußeren Erwärmung auf. Durch die Temperaturmessung mittels der Sensoren T2, T3 und T4 und durch thermische Konstanten lässt sich aus diesen ein äquivalenter, rechteckförmiger Vergleichsimpuls berechnen. Voraussetzung hierfür ist ein angenommenes adiabatisches Verhalten während des Impulses. Dies ist bei geringen Impulszeiten kleiner der Temperaturzeitkonstante der Bauelemente als gegeben vorauszusetzen.

Ist die Impulsdauer länger als die vorgenannte Zeitkonstante, so kann aus dem Temperaturanstiegsverhalten die Impulsdauer bestimmt werden.

Die Berechnung der Impulsparameter greift auf die nachstehenden Formeln 4, 5 und 6 sowie die nachstehende Tabelle 3 zurück.

Formel 4 Berechnung der Impulsdauer:

$$t_{Imp} = \frac{\Delta\vartheta_D^{\;2}}{\Delta\vartheta_R} * \frac{\gamma * \alpha}{\beta^2} * \frac{R}{U_D^{\;2}}$$

Formel 5 Berechnung des Spannungsabfalls am Widerstand:

$$U_R = \frac{\Delta\vartheta_R}{\Delta\vartheta_D} * U_D * \frac{\beta}{\alpha}$$

Formel 6 Berechnung des Impulsstroms:

$$I_{Imp} = \frac{\Delta\vartheta_R}{\Delta\vartheta_D} * \frac{U_D}{R} * \frac{\beta}{\alpha}$$

Tabelle 3 Berechnung von Impulsparametern

| Formelzeichen | Bezeichnung | Einheit |
|---|---|---|
| $t_{Imp}$ | Impulsdauer | s |
| $\Delta\vartheta_D$ | Temperaturänderung Diode | K |
| $\Delta\vartheta_R$ | Temperaturänderung Widerstand | K |
| $\alpha$ | Temperaturkonstante Widerstand | K |
| $\beta$ | Temperaturkonstante Diode | K |
| $\gamma$ | Energiekonstante Widerstand | Ws |
| R | Widerstandswert | $\Omega$ |
| $U_D$ | Supressorspannung der Diode | V |
| $U_R$ | Spannungsabfall am Widerstand | V |
| $I_{Imp}$ | Impulsstrom | A |

Mit Hilfe von mathematischen Abbildungen der Kennlinien aus zur Verfügung stehenden Datenblättern der eingesetzten Bauelemente, lassen sich die inneren Temperaturen, insbesondere der Diode V1 und der Widerstände R1 und R2 berechnen.

Ein konkretes Beispiel soll im Folgenden auf der Basis des Anwendungsfalls einer Supressordiode BXT ML4 BE5 erläutert werden.

Die Schaltungsanordnung liefert Informationen zu einem eingesetzten Drahtwiderstand, der ein $\alpha$ von 1,7 K und einen elektrischen Widerstand von 1 $\Omega$ besitzt.

Bei der Diode V1 handelt es sich um eine Supressordiode mit einer mittleren Durchgangsspannung von 8,5 V über dem verwendeten Bereich und 1 $\beta$ von 1,26 K. Die Energiekonstante $\chi$ = 1 Ws dient zur Einheitenkorrektur, da der Zahlenwert in die Konstanten $\alpha$ und $\beta$ eingerechnet wurde. Durch mathematische Näherung der Kennlinie für den Zeitbereich bis zu 3 s können die inneren Temperaturen in der Diode mit folgender Gleichung bestimmt werden:

Formel 7 Berechnung der Sperrschichttemperatur:

$$T_{Junc} = \varepsilon * \left( \frac{\Delta\vartheta_D{}^2}{\Delta\vartheta_R} * \frac{\alpha * \gamma}{\beta^2} * \frac{R}{U_D{}^2} \right)^{0,51} * \frac{U_D{}^2}{R} * \frac{\beta}{\alpha} + T_{Ambi}$$

Tabelle 4 Berechnung der Sperrschichttemperatur

| Formelzeichen | Bezeichnung | Einheit | Wert |
|---|---|---|---|
| $t_{Imp}$ | Impulsdauer | s | - |
| $\Delta\vartheta_D$ | Temperaturänderung Diode | K | - |
| $\Delta\vartheta_R$ | Temperaturänderung Widerstand | K | - |
| $\alpha$ | Temperaturkonstante Widerstand | K | 1,7K |
| $\beta$ | Temperaturkonstante Diode | K | 1,26K |

(fortgesetzt)

| Formelzeichen | Bezeichnung | Einheit | Wert |
|---|---|---|---|
| γ | Energiekonstante Widerstand | Ws | 1Ws |
| R | Widerstandswert | Ω | 1 Ω |
| $U_D$ | Supressorspannung der Diode | V | - |
| $U_R$ | Spannungsabfall am Widerstand | V | - |
| $I_{Imp}$ | Impulsstrom | A | - |
| ε | Temperaturleistungsfaktor | K/W | 7,36K/W |
| $T_{Junc}$ | Sperrschichttemperatur | K | |
| $T_{Ambi}$ | Umgebungstemperatur | K | |

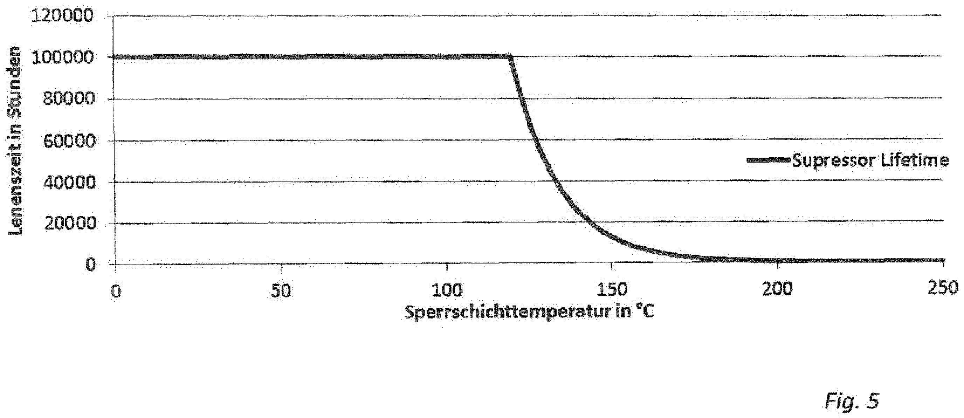

Anhand der so berechneten Sperrschichttemperatur lässt sich mit dem Modell nach Fig. 5 die Schädigung des Bauteils durch den jeweiligen Impuls bestimmen.

Auch die Temperatur des Widerstands R1 bzw. R2 lässt sich durch die gegebenen Parameter Impulsstrom und die Impulsdauer ermitteln. Bei einem eingesetzten Drahtwiderstand ist ab einer Maximaltemperatur des Drahts von 500° C oder einer äußeren Temperatur von 250° C von einem Defekt auszugehen. Eine Alterungsbestimmung muss bei einem solchen linearen ohmschen Widerstand nicht erfolgen.

Bei der vorstehend geschilderten, anhand des Ausführungsbeispiels näher illustrierten Lösung werden als Messgrößen zur Zustandsbewertung also der Peakstrom und die Temperatur der eingesetzten Ableiter bestimmt. Aus den Eingangsdaten sowie bekannten Kennlinienwerten der eingesetzten Bauelemente lässt sich dann die Impulsdauer und der Energieumsatz sowie die innere Bauteiltemperatur ermitteln, woraus ein Modell zur Lebenszeitberechnung abgeleitet werden kann und letztendlich eine Anzeige von Schädigungen bzw. einer erwarteten Restlebensdauer möglich ist. Die erfindungsgemäße Lösung lässt sich auf einer separaten Platine, welche eine Temperaturmessung der eingesetzten Halbleiterbauelemente bzw. der Widerstände sowie eine Strommessung ermöglicht und wobei die Leiterplatte einen entsprechenden Mikrokontroller mit den notwendigen Berechnungsalgorithmen enthält, für jeden Ableiter nachrüstbar gestalten.

**Patentansprüche**

1. Mehrstufige, koordinierte Überspannungsableiterschaltung mit mindestens einem ersten, Grobschutz-Ableiterpfad in einem ersten Querzweig und einem zweiten, Feinschutz-Ableiterpfad in einem weiteren Querzweig, wobei im ersten Ableiterpfad eine galvanisch getrennte Stoßstrommesseinrichtung und eine Überwachungseinrichtung für einen physikalischen Zustand des im ersten Ableiterpfad befindlichen Überspannungsableiters angeordnet sind und mit einer Auswerteeinheit, wobei den Überspannungsableitern im zweiten Ableiterpfad jeweils ebenfalls eine Überwachungseinrichtung für einen physikalischen Zustand zugeordnet ist, wobei besagte jeweilige Zustandsüberwachung dazu eingerichtet ist, eine Bestimmung der Temperatur der jeweiligen Überspannungsableiter auszuführen, wobei besagte Auswerteeinrichtung dazu eingerichtet ist, aus den gemessenen Temperaturen und der Temperaturanstiegszeit die umgesetzte Energie im jeweiligen Überspannungsableiter zu ermitteln und hieraus eine Bestimmung möglicher Schädigungen der jeweiligen Überspannungsableiter vorzunehmen,
**dadurch gekennzeichnet, dass**
besagte Auswerteeinrichtung weiterhin dazu eingerichtet ist, im ersten Ableiterpfad den im Überspannungsfall auftretenden Peakstrom und die Temperaturveränderung des dort eingesetzten Überspannungsableiters (A1) zu erfassen und aus diesen Werten einen äquivalenten Rechteckimpuls zur Schädigungsbewertung zu bestimmen.

2. Überspannungsableiterschaltung nach Anspruch 1,
**dadurch gekennzeichnet, dass**
die Auswerteeinheit weiterhin dazu eingerichtet ist, die bestimmten Schädigungen der Überspannungsableiter aufzusummieren und über eine Anzeigeeinheit darzustellen oder an eine übergeordnete Auswerteeinheit zu übertragen.

3. Überspannungsableiterschaltung nach Anspruch 1 oder 2,
**dadurch gekennzeichnet, dass**
an allen eingesetzten Überspannungsableitern (A1; R1; R2; V1) thermisch leitend, jedoch galvanisch getrennt Thermoelemente (T1; T2; T3; T4;) vorgesehen sind und als Strommesseinrichtung eine Messspule (I) am ersten Ableiterpfad ausgebildet ist.

4. Überspannungsableiterschaltung nach Anspruch 1,
**dadurch gekennzeichnet, dass**
besagte Auswerteeinheit dazu eingerichtet ist,
beim Überschreiten einer vorgegebenen Stromschwelle den eingesetzten Ableiter (A1) als defekt zu bewerten.

5. Überspannungsableiterschaltung nach einem der vorangegangenen Ansprüche,
**dadurch gekennzeichnet, dass**
besagte Auswerteeinheit dazu eingerichtet ist zur Bestimmung der Schädigung oder des Alterungsverhaltens der Überspannungsableiter (R1; R2;V1) im zweiten Ableiterpfad das impulsspannungsabhängige Erwärmungsverhalten der eingesetzten Überspannungsableiter zu bewerten, wobei im zweiten Feinschutz-Ableiterpfad im Querzweig ein Halbleiterbauelement, ausgebildet als eine oder mehrere Diodenbaugruppen (V1) und im Längszweig lineare ohmsche Widerstände (R1; R2) angeordnet sind sowie die Auswerteeinheit weiterhin dazu eingerichtet ist, aus dem Stromintegral im zweiten Ableiterpfad und den Kennliniendaten der Diodenbaugruppe (V1) die jeweilige Sperrschichttemperatur zu bestimmen und hieraus eine Schädigung zu ermitteln.

6. Überspannungsableiterschaltung nach Anspruch 5,
**dadurch gekennzeichnet, dass**
die eine oder mehreren Diodenbaugruppen (V1) als Supressordioden ausgebildet ist.

7. Überspannungsableiterschaltung nach Anspruch 5,
**dadurch gekennzeichnet, dass**
besagte Auswerteeinheit dazu eingerichtet ist, aus der an den linearen Widerständen (R1; R2) umgesetzten Energie, welche über die Temperaturmessung ermittelbar ist, indirekt das Stromintegral im zweiten Ableiterpfad abzuleiten.

8. Überspannungsableiterschaltung nach einem der vorangegangenen Ansprüche,
**dadurch gekennzeichnet, dass**
die Überwachungseinrichtungen und die Strommesseinrichtung (I) als eine, auf einem separaten Verdrahtungsträger befindliche Baugruppe ausgebildet sind.

## Claims

1. A multistage coordinated overvoltage arrester circuit comprising at least a first, coarse protection arrester path in a first transverse branch and a second, fine protection arrester path in a further transverse branch, an electrically isolated surge current measuring device and a monitoring device for a physical state of the overvoltage arrester located in the first arrester path being arranged in the first arrester path, and comprising an evaluating unit, the overvoltage arresters in the second arrester path likewise each being assigned a monitoring device for a physical state, said respective state monitoring being configured to carry out a determination of the temperature of the respective overvoltage arresters, said evaluating device being configured to ascertain the converted energy in the respective overvoltage arrester from the measured temperatures and the temperature rise time and, based thereon, to perform a determination of possible damage to the respective overvoltage arresters,
**characterized in that**
said evaluating device is further configured to detect, in the first arrester path, the peak current occurring in the overvoltage event and the change in temperature of the overvoltage arrester (A1) employed there, and to determine, from these values, an equivalent square-wave pulse for damage assessment.

2. The overvoltage arrester circuit according to claim 1,
**characterized in that**
the evaluating unit is further configured to add up the determined damage to the overvoltage arresters and to display it by means of a display unit or to transmit it to a superordinate evaluating unit.

3. The overvoltage arrester circuit according to claim 1 or 2,
**characterized in that**
thermocouples (T1; T2; T3; T4) are provided in a thermally conducting, but electrically isolated manner on all of the overvoltage arresters (A1; R1; R2; V1) employed, and a measuring coil (I) is formed as the current measuring device on the first arrester path.

4. The overvoltage arrester circuit according to claim 1,
   **characterized in that**
   said evaluating unit is configured to
   assess the employed arrester (A1) as being defective when a predefined current threshold is exceeded.

5. The overvoltage arrester circuit according to any of the preceding claims,
   **characterized in that**
   said evaluating unit is configured to assess the pulse voltage-dependent heating behavior of the employed overvoltage arresters for determining the damage to or the ageing behavior of the overvoltage arresters (R1; R2; V1) in the second arrester path, wherein, in the second fine protection arrester path, a semiconductor device formed as one or more diode assemblies (V1) is arranged in the transverse branch, and linear ohmic resistors (R1; R2) are arranged in the longitudinal branch, and the evaluating unit is further configured to determine the respective junction temperature from the current integral in the second arrester path and the characteristic curve data of the diode assembly (V1) and to ascertain a damage therefrom.

6. The overvoltage arrester circuit according to claim 5,
   **characterized in that**
   the one or more diode assemblies (V1) is/are formed as suppressor diodes.

7. The overvoltage arrester circuit according to claim 5,
   **characterized in that**
   said evaluating unit is configured to indirectly derive the current integral in the second arrester path from the energy that is converted at the linear resistors (R1; R2) and that can be ascertained through the temperature measurement.

8. The overvoltage arrester circuit according to any of the preceding claims,
   **characterized in that**
   the monitoring devices and the current measuring device (I) are formed as an assembly located on a separate wiring carrier.

## Revendications

1. Circuit parasurtenseur coordonné à plusieurs étages, comprenant au moins une première voie de parasurtenseur de protection grossière dans une première branche transversale et une deuxième voie de parasurtenseur de protection fine dans une autre branche transversale, un moyen de mesure de courant de choc galvaniquement isolé et un moyen de surveillance pour un état physique du parasurtenseur se trouvant dans la première voie de parasurtenseur étant agencés dans la première voie de parasurtenseur, et comprenant une unité d'évaluation, un moyen de surveillance pour un état physique étant également respectivement associé aux parasurtenseurs dans la deuxième voie de parasurtenseur, la surveillance d'état respective étant aménagée de manière à réaliser une détermination de la température des parasurtenseurs respectifs, le moyen d'évaluation étant aménagé de manière à détecter l'énergie convertie dans le parasurtenseur respectif à partir des températures mesurées et du temps de montée en température et, sur cette base, à effectuer une détermination d'endommagements éventuels des parasurtenseurs respectifs,
   **caractérisé en ce que**
   le moyen d'évaluation est en outre aménagé de manière à saisir, dans la première voie de parasurtenseur, le courant de pointe survenant dans un cas de surtension et le changement de température du parasurtenseur (A1) employé à cet endroit, et à déterminer, à partir de ces valeurs, une impulsion rectangulaire équivalente pour l'évaluation des dommages.

2. Circuit parasurtenseur selon la revendication 1,
   **caractérisé en ce que**
   l'unité d'évaluation est en outre aménagée de manière à additionner les endommagements déterminés des parasurtenseurs et à les afficher au moyen d'une unité d'affichage ou à les transmettre à une unité d'évaluation de rang supérieur.

3. Circuit parasurtenseur selon la revendication 1 ou 2,

**caractérisé en ce que**
des thermocouples (T1 ; T2 ; T3 ; T4) sont prévus sur tous les parasurtenseurs (A1 ; R1 ; R2 ; V1) employés de manière thermiquement conductrice, mais galvaniquement isolée, et une bobine de mesure (I) est réalisée sous forme de moyen de mesure du courant sur la première voie de parasurtenseur.

4. Circuit parasurtenseur selon la revendication 1,
**caractérisé en ce que**
l'unité d'évaluation est aménagée de manière à
évaluer le parasurtenseur (A1) utilisé comme étant défectueux lorsqu'un seuil de courant prédéterminé est dépassé.

5. Circuit parasurtenseur selon l'une des revendications précédentes,
**caractérisé en ce que**
l'unité d'évaluation est aménagée de manière à évaluer le comportement d'échauffement dépendant de la tension d'impulsion des parasurtenseurs employés pour déterminer l'endommagement ou le comportement de vieillissement des parasurtenseurs (R1 ; R2 ; V1) dans la deuxième voie de parasurtenseur, un composant semi-conducteur réalisé sous forme d'un ou de plusieurs ensembles de diodes (V1) étant agencé dans la deuxième voie de parasurtenseur de protection fine dans la branche transversale, et des résistances ohmiques linéaires (R1 ; R2) étant agencées dans la branche longitudinale, et l'unité d'évaluation étant en outre aménagée de manière à déterminer la température de couche de jonction respective à partir de l'intégrale du courant dans la deuxième voie de parasurtenseur et des données de la courbe caractéristique de l'ensemble de diodes (V1), et à détecter un endommagement à partir de là.

6. Circuit parasurtenseur selon la revendication 5,
**caractérisé en ce que**
ledit un ou lesdits plusieurs ensembles de diodes (V1) est/sont réalisé(s) sous forme de diodes de suppression.

7. Circuit parasurtenseur selon la revendication 5,
**caractérisé en ce que**
l'unité d'évaluation est aménagée de manière à dériver indirectement l'intégrale du courant dans la deuxième voie de parasurtenseur à partir de l'énergie convertie au niveau des résistances linéaires (R1 ; R2), laquelle est apte à être déterminée par la mesure de température.

8. Circuit parasurtenseur selon l'une des revendications précédentes,
**caractérisé en ce que**
les moyens de surveillance et le moyen de mesure du courant (I) sont réalisés sous forme d'un ensemble agencé sur un support de câblage séparé.

Fig. 1

*Fig. 2*

EP 3 257 120 B1

Fig. 3

Fig. 4

*Fig. 5*

EP 3 257 120 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004006987 B3
- WO 2011058318 A1
- DE 102008016585 A1
- EP 2574940 A1
- DE 102011110252 A1
- EP 2675032 A1
- DE 112010004351 T5
- DE 202012002281 U1